(19) Europäisches Patentamt
European Patent Office
Office européen des brevets

(11) **EP 4 568 195 A1**

(12) **EUROPEAN PATENT APPLICATION**

(43) Date of publication:
**11.06.2025 Bulletin 2025/24**

(21) Application number: **23214930.2**

(22) Date of filing: **07.12.2023**

(51) International Patent Classification (IPC):
**H04L 25/02** (2006.01)  **G06N 3/045** (2023.01)
**G06N 3/08** (2023.01)

(52) Cooperative Patent Classification (CPC):
**H04L 25/0254; G06N 3/045; G06N 3/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
- **CHEN, Yejian
  Stuttgart (DE)**
- **WILD, Thorsten
  Stuttgart (DE)**
- **HENRY, Christophe
  Pleumeur Bodou (FR)**

(74) Representative: **Nokia EPO representatives
Nokia Technologies Oy
Karakaari 7
02610 Espoo (FI)**

(54) **APPARATUS COMPRISING AT LEAST ONE PROCESSOR PERFORMING CHANNEL PREDICTION**

(57) An apparatus, comprising at least one processor, and at least one memory storing instructions that, when executed by the at least one processor, cause the apparatus to: provide a first machine learning model configured to receive first information associated with at least one signal and to provide a first channel prediction based on the first information, provide a second machine learning model configured to receive second information and to provide a second channel prediction based on the second information, the second information comprising the first information and at least temporarily comprising the first channel prediction, determine the second channel prediction using at least the second machine learning model.

**Fig. 1A**

EP 4 568 195 A1

## Description

## Field of the Disclosure

Various example embodiments relate to an apparatus comprising at least one processor.

Further example embodiments relate to a method associated with an apparatus comprising at least one processor.

## Background

In wireless communication systems, channel estimation can be used to determine properties of a radio channel, e.g., to process data received over the radio channel. In some approaches, an objective of channel estimation is to determine, e.g., extract a channel vector 'H' from a received signal vector 'Y', e.g., in order to accurately decode a transmitted data signal 'X'. In some approaches, channel prediction can be used, wherein properties of the radio channel are predicted.

## Summary

Various example embodiments of the disclosure are set out by the independent claims.

Some examples relate to an apparatus, comprising at least one processor, and at least one memory storing instructions that, when executed by the at least one processor, cause the apparatus to: provide a first machine learning model configured to receive first information associated with at least one signal and to provide a first channel prediction based on the first information, provide a second machine learning model configured to receive second information and to provide a second channel prediction based on the second information, the second information comprising the first information and at least temporarily comprising the first channel prediction, determine the second channel prediction using at least the second machine learning model. In some examples, this may contribute to a comparatively precise channel prediction.

In some examples, the signal may, e.g., be a signal as transmitted by at least one transmitter, e.g., over a radio channel and received by a receiver, e.g., of a wireless communication system, or a signal derived from such received signal.

In some examples, the receiver may be a receiver for a wireless, e.g., cellular, communication system or network.

In some examples, the receiver may be a receiver for a terminal device, e.g., user equipment, for a wireless communication network, or Unmanned Aerial Vehicle (UAV), e.g., as a complementary assistance part of the conventional wireless communication network.

In some examples, the receiver may be a receiver for a network device, e.g., base station, e.g., gNB, for a wireless communication network.

In some examples, the signal may, e.g., be a signal as can be obtained by simulation, e.g., of a receiver, e.g., of a wireless communication system, or a signal derived from such received signal.

In some examples, the first channel prediction is a first, for example comparatively coarse, channel prediction for the radio channel associated with the received signal. In some examples, the second channel prediction is a second, for example comparatively fine, channel prediction for the radio channel associated with the received signal.

In some examples, the instructions, when executed by the at least one processor, cause the apparatus to at least temporarily provide the first information and the second channel prediction as the second information to the second machine learning model. In some examples, this enables to provide a feedback loop, e.g., with respect to the second machine learning model.

In some examples, the instructions, when executed by the at least one processor, cause the apparatus to: provide first training data for training of at least the first machine learning model, wherein the first training data comprises an estimable part, a predictable part, and associated labels, train at least the first machine learning model based on the first training data and a first loss function.

In some examples, the instructions, when executed by the at least one processor, cause the apparatus to: provide historic data of the at least one signal, to partition the historic data into the estimable part and the predictable part. Thus, in some examples, the historic data, which has, for example, been determined or generated in the past, may be used, e.g., for training of at least one of the machine learning models.

In some examples, the instructions, when executed by the at least one processor, cause the apparatus to: provide second training data for training of the second machine learning model, wherein the second training data comprises the first training data and at least one of: a) the first channel prediction, or b) the second channel prediction, train the second machine learning model based on the second training data and a second loss function, which is different from the first loss function.

In some examples, the instructions, when executed by the at least one processor, cause the apparatus to: use the first training data and the first channel prediction as obtained by the first machine learning model in a first training phase for training the second machine learning model, use the first training data and the second channel prediction as obtained by the second machine learning model in a subsequent second training phase for training the second machine learning model. In some examples, the second training phase may follow, for example directly, the first training phase. In some examples, the second training phase does not follow directly the first training phase.

In some examples, the instructions, when executed by the at least one processor, cause the apparatus to: collect historic data of the at least one signal associated with at least two different domains of the following domains: a) a time domain, or b) a frequency domain, or c) a spatial domain, determine training data for training at least one of the first machine learning model or the second machine learning model based on the collected historic data.

In some examples, the instructions, when executed by the at least one processor, cause the apparatus to: provide at least one machine learning system comprising an instance of the first machine learning model and an instance of the second machine learning model, provide a plurality of prediction paths to obtain a plurality of second channel predictions using the at least one machine learning system, each of the plurality of second channel predictions associated with a respective one of the plurality of prediction paths, combine at least two of the plurality of second channel predictions.

In some examples, the at least one machine learning system may, e.g., implement a respective instance of the first machine learning model and the second machine learning model.

In some examples, more than one machine learning system may be provided, wherein, for example, at least two machine learning systems may comprise different instances of the first machine learning model and the second machine learning model. In some examples, the at least two machine learning systems may be implemented by providing a single hardware and/or software basis for implementing the first and second machine learning models, and by providing different sets of parameters and/or hyper parameters for the respective machine learning models, the different sets of parameters and/or hyper parameters, e.g., associated with a respective one of the different machine learning systems.

In some examples, e.g., when providing a single hardware and/or software basis for implementing the first and second machine learning models, processing of aspects related to the different machine learning systems (e.g., performing at least one of training or inference) may, e.g., be performed in a time division duplexed manner.

In some examples, e.g., when providing a several hardware and/or software bases for implementing the first and second machine learning models, processing of aspects related to the different machine learning systems (e.g., performing at least one of training or inference) may, e.g., be performed in a at least partly temporally overlapping fashion, e.g., in parallel, e.g., simultaneously.

In some examples, the instructions, when executed by the at least one processor, cause the apparatus to: provide a plurality of machine learning systems, train at least two machine learning systems of the plurality of machine learning systems differently from each other. In some examples, training the at least two machine learning systems of the plurality of machine learning systems differently from each other may comprise at least one of: a) using different training data for the training, or b) using different parameters, e.g., hyper parameters, for the at least two machine learning systems.

In some examples, the instructions, when executed by the at least one processor, cause the apparatus to: provide the at least two of the plurality of second channel predictions to at least one further machine learning system.

In some examples, at least one of a) the first machine learning model or b) the second machine learning model is a dense neural network.

In some examples, at least one of a) the first machine learning model or b) the second machine learning model may comprise two or more layers.

In some examples, at least one of a) the first machine learning model or b) the second machine learning model may comprise two fully connected layers.

Some examples relate to an apparatus, comprising means for: providing a first machine learning model configured to receive first information associated with at least one signal and to provide a first channel prediction based on the first information, providing a second machine learning model configured to receive second information and to provide a second channel prediction based on the second information, the second information comprising the first information and at least temporarily comprising the first channel prediction, determining the second channel prediction using at least the second machine learning model.

In some examples, the means for providing the first machine learning model, providing the second machine learning model, determining the second channel prediction may comprise at least one processor, and at least one memory storing instructions that, when executed by the at least one processor, cause an apparatus to perform at least one of the aforementioned aspects of providing the first machine learning model, providing the second machine learning model, determining the second channel prediction.

In some examples, the means for providing the first machine learning model, providing the second machine learning model, determining the second channel prediction may, e.g., comprise circuitry configured to perform the aforementioned aspects.

Some examples relate to a method, comprising: providing a first machine learning model configured to receive first information associated with at least one signal and to provide a first channel prediction based on the first information, providing a second machine learning model configured to receive second information and to provide a second channel prediction based on the second information, the second information comprising the first information and at least temporarily comprising the first channel prediction, determining the second channel prediction using at least the second machine learning model.

Some examples relate to a device for a communication system, e.g., a wireless, e.g., cellular, communication system, the device comprising at least one apparatus according to the example embodiments.

Some examples relate to a computer program comprising instructions which, when executed by an apparatus, cause the apparatus to perform at least some aspects of the method according to the example embodiments.

In some examples, the computer program may be provided on a computer readable storage medium SM, e.g., a non-transitory computer readable medium.

Some examples relate to a data carrier signal carrying and/or characterizing the computer program according to the example embodiments.

**Brief Description of the Drawings**

Fig. 1A schematically depicts a simplified block diagram according to some examples,

Fig. 1B schematically depicts a simplified block diagram according to some examples,

Fig. 2 schematically depicts a simplified block diagram according to some examples,

Fig. 3 schematically depicts a simplified flow chart according to some examples,

Fig. 4 schematically depicts a simplified flow chart according to some examples,

Fig. 5 schematically depicts a simplified flow chart according to some examples,

Fig. 6 schematically depicts a simplified block diagram according to some examples,

Fig. 7 schematically depicts a simplified flow chart according to some examples,

Fig. 8 schematically depicts a simplified flow chart according to some examples,

Fig. 9 schematically depicts a simplified flow chart according to some examples,

Fig. 10 schematically depicts a simplified flow chart according to some examples,

Fig. 11 schematically depicts a simplified flow chart according to some examples,

Fig. 12 schematically depicts a simplified flow chart according to some examples,

Fig. 13A schematically depicts aspects of training of a machine learning system according to some examples,

Fig. 13B schematically depicts aspects of using a machine learning system according to some examples,

Fig. 14 schematically depicts aspects of a prediction path according to some examples,

Fig. 15 schematically depicts aspects of training data according to some examples,

Fig. 16 schematically depicts aspects of combining according to some examples,

Fig. 17 schematically depicts aspects of combining according to some examples,

Fig. 18 schematically depicts aspects of resources according to some examples,

Fig. 19 schematically depicts a block diagram according to some examples.

**Description of some Example Embodiments**

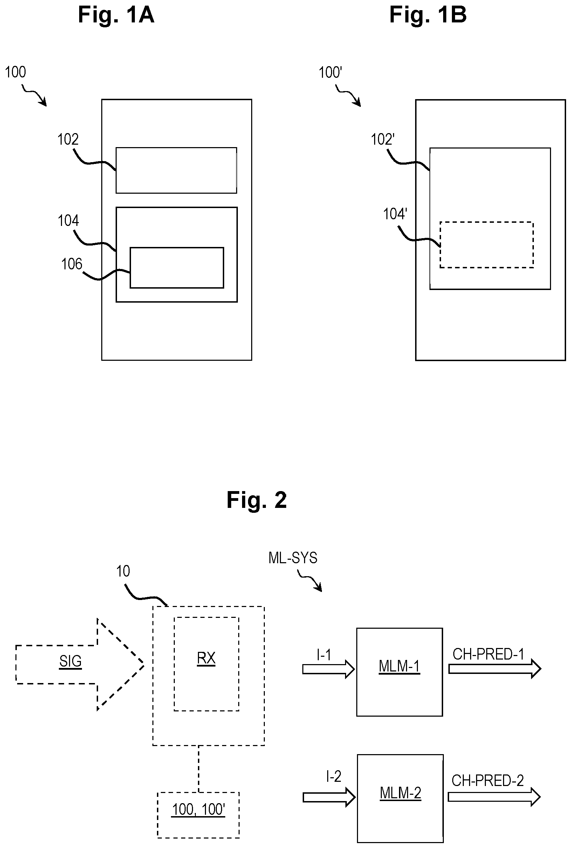

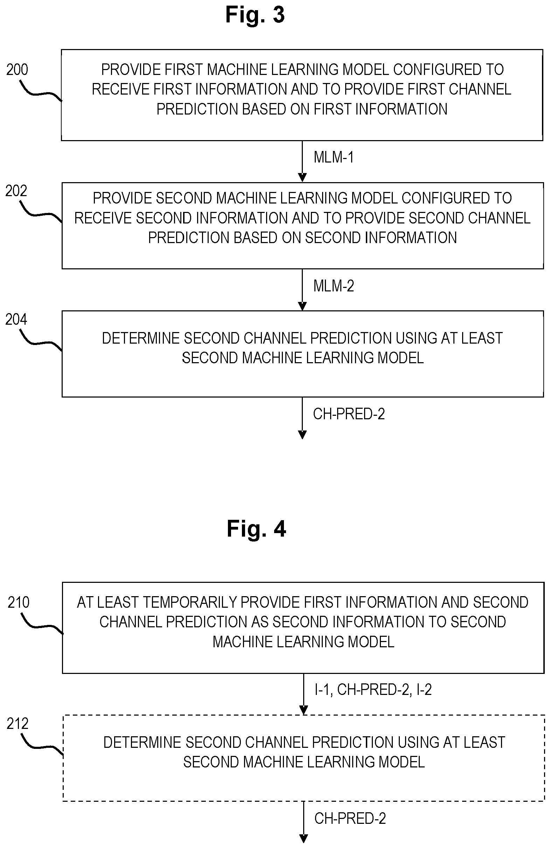

Some examples, see Fig. 1A, 2, 3, relate to an apparatus 100, comprising at least one processor 102, and at least one memory 104 storing instructions 106 that, when executed by the at least one processor 102, cause the apparatus 100 to: provide 200 (Fig. 3) a first machine learning model MLM-1 configured to receive first information I-1 associated with at least one signal SIG and to provide a first channel prediction CH-PRED-1 based on the first information I-1, provide 202 a second machine learning model MLM-2 configured to receive second information 1-2 and to provide a second channel prediction CH-PRED-2 based on the second information 1-2, the second information I-2 comprising the first information I-1 and at least temporarily comprising the first channel prediction CH-PRED-1, determine 204 the second channel prediction CH-PRED-2 using at least the second machine learning model MLM-2. In some examples, this may contribute to a comparatively precise channel prediction.

In some examples, Fig. 2, the signal SIG may, e.g., be a signal as transmitted by at least one transmitter (not shown), e.g., over a radio channel and received by a receiver RX, e.g., of a wireless communication system, or a signal derived from such received signal SIG.

In some examples, the signal SIG may comprise reference signals, e.g., sounding reference signals, SRS, or demodulation reference signals, DMRS, e.g., according to some accepted specification.

In some examples, the receiver RX may be a receiver for a wireless, e.g., cellular, communication system or network.

In some examples, the receiver RX may be a receiver for a terminal device, e.g., user equipment, 10 for a wireless communication network.

In some examples, the receiver RX may be a receiver for a network device, e.g., base station, e.g., gNB, (not shown) for a wireless communication network.

In some examples, the signal SIG may, e.g., be a signal as can be obtained by simulation, e.g., of a receiver, e.g., of a wireless communication system, or a signal derived from such received signal.

In some examples, Fig. 2, the first channel prediction CH-PRED-1 is a first, for example comparatively coarse, channel prediction for the radio channel associated with the received signal SIG (e.g., the radio channel through which the signal SIG has been transmitted). In some examples, the second channel prediction CH-PRED-2 is a second, for example comparatively fine, channel prediction for the radio channel associated with the received signal SIG. In some examples, the second channel prediction CH-PRED-2 may be used for a future processing, e.g., of signals received (and/or to be transmitted) over the radio channel, e.g., similar to the signal SIG.

In some examples, Fig. 4, the instructions 106, when executed by the at least one processor 102, cause the apparatus 100 to at least temporarily provide 210 the first information I-1 and the second channel prediction CH-PRED-2 as the second information I-2 to the second machine learning model MLM-2 (Fig. 2). In some examples, this enables to provide a feedback loop, e.g., with respect to the second machine learning model MLM-2. The optional block 212 of Fig. 4 symbolizes determining, according to some examples, the second channel prediction CH-PRED-2 using at least the second machine learning model MLM-2.

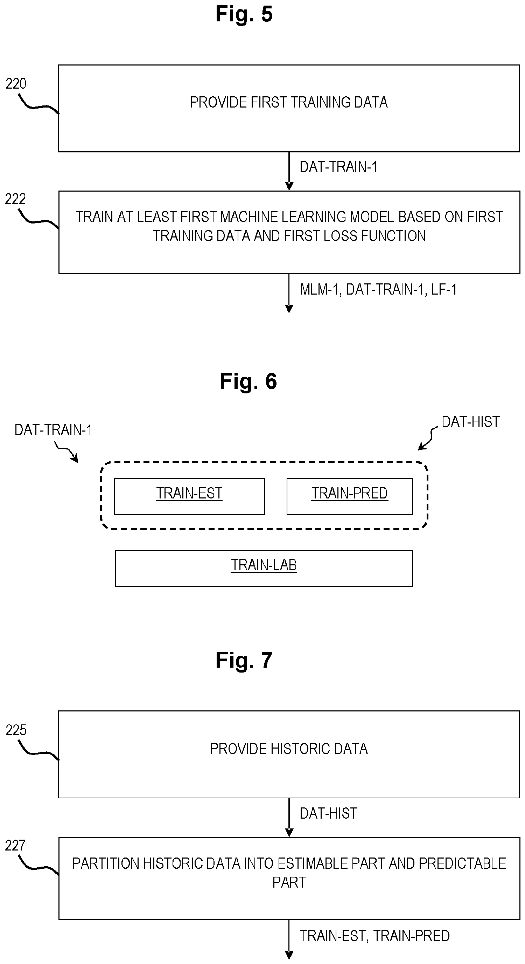

In some examples, Fig. 5, 6, the instructions 106, when executed by the at least one processor 102, cause the apparatus 100 to: provide 220 first training data DAT-TRAIN-1 for training of at least the first machine learning model MLM-1, wherein the first training data DAT-TRAIN-1 comprises an estimable part TRAIN-EST, a predictable part TRAIN-PRED, and associated labels TRAIN-LAB, train 222 at least the first machine learning model MLM-1 based on the first training data DAT-TRAIN-1 and a first loss function LF-1.

In some examples, Fig. 7, the instructions 106, when executed by the at least one processor 102, cause the apparatus 100 to: provide 225 historic data DAT-HIST of the at least one signal SIG (or a signal derived from the at least one signal SIG), to partition 227 the historic data DAT-HIST into the estimable part TRAIN-EST and the predictable part TRAIN-PRED. Thus, in some examples, the historic data DAT-HIST, which has, for example, been determined or generated in the past, may be used, e.g., for training of at least one of the machine learning models MLM-1, MLM-2.

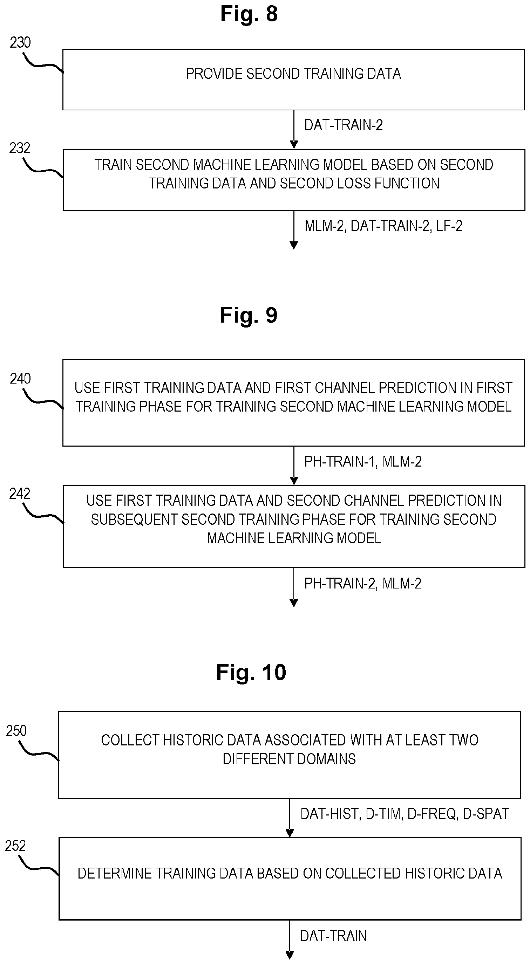

In some examples, Fig. 8, the instructions 106, when executed by the at least one processor 102, cause the apparatus 100 to: provide 230 second training data DAT-TRAIN-2 for training of the second machine learning model MLM-2 (Fig. 2), wherein the second training data DAT-TRAIN-2 comprises the first training data DAT-TRAIN-1 and at least one of: a) the first channel prediction CH-PRED-1, or b) the second channel prediction CH-PRED-2, train 232 the second machine learning model MLM-2 based on the second training data DAT-TRAIN-2 and a second loss function LF-2, which is different from the first loss function LF-1.

In some examples, Fig. 9, the instructions 106, when executed by the at least one processor 102, cause the apparatus 100 to: use 240 the first training data DAT-TRAIN-1 and the first channel prediction CH-PRED-1 as obtained by the first machine learning model MLM-1 in a first training phase PH-TRAIN-1 for training the second machine learning model MLM-2, use 242 the first training data DAT-TRAIN-1 and the second channel prediction CH-PRED-2 as obtained by the second machine learning model MLM-2 in a subsequent second training phase PH-TRAIN-2 for training the second machine learning model MLM-2. In some examples, the second training phase PH-TRAIN-2 may follow, for example directly, the first training phase PH-TRAIN-2. In some examples, the second training phase does not follow directly the first training phase.

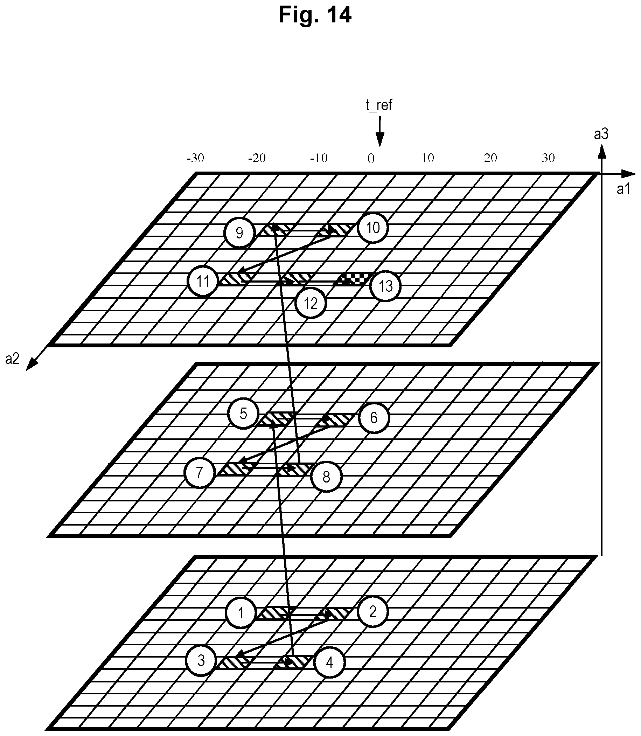

In some examples, Fig. 10, the instructions 106, when executed by the at least one processor 102, cause the apparatus 100 to: collect 250 historic data DAT-HIST (e.g., in some examples, the historic data mentioned above) of the at least one signal SIG associated with at least two different domains of the following domains: a) a time domain D-TIM, or b) a frequency domain D-FREQ, or c) a spatial domain D-SPAT, determine 252 training data DAT-TRAIN for training at least one of the first machine learning model MLM-1 or the second machine learning model MLM-2 based on the collected historic data. In some examples, at least parts of the first training data DAT-TRAIN-1 and/or of the second training data DAT-TRAIN-2 may be determined based on the training data DAT-TRAIN as obtained according to block 252 of Fig. 10. Further details and examples regarding historic data associated with different domains D-TIM, D-FREQ, D-SPAT are provided further below with reference to Fig. 14.

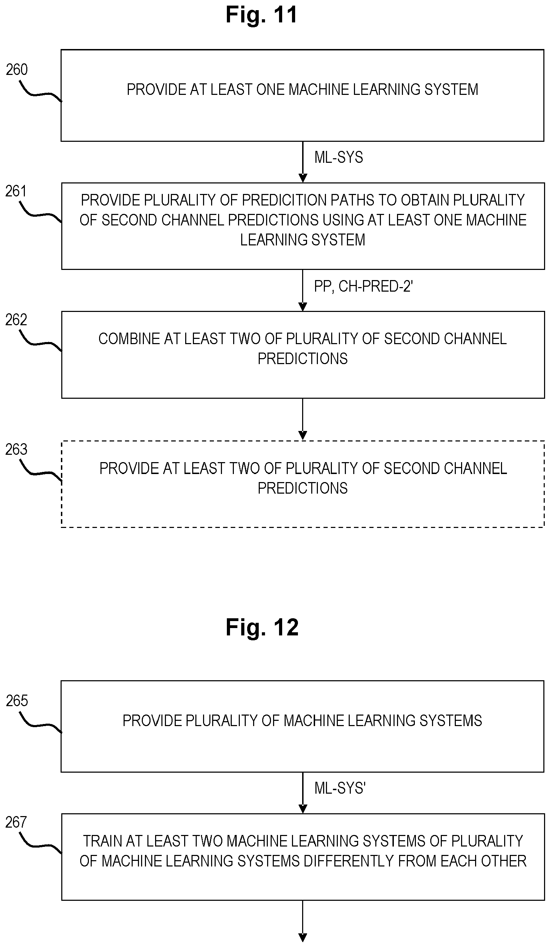

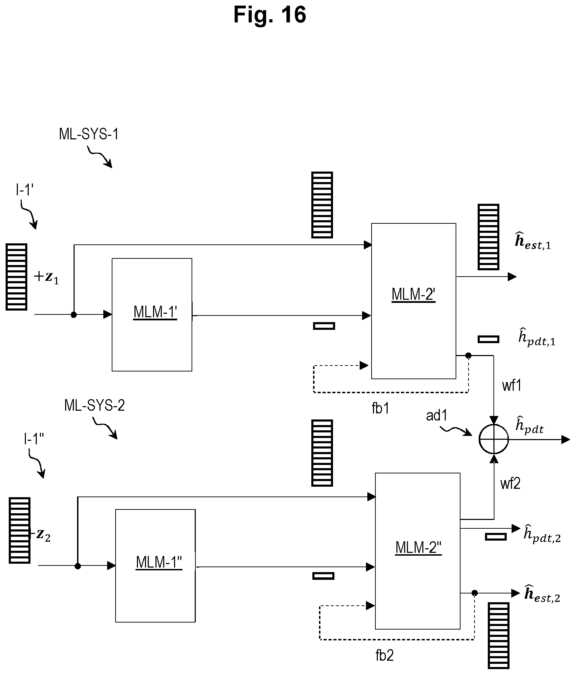

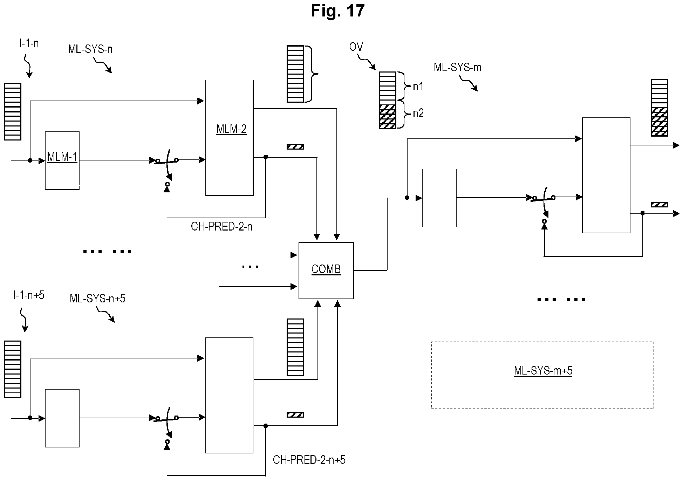

In some examples, Fig. 11, the instructions 106, when executed by the at least one processor 102, cause the apparatus 100 to: provide 260 at least one machine learning system ML-SYS (see also Fig. 2) comprising an instance of the first machine learning model MLM-1 and an instance of the second machine learning model MLM-2, provide 261 a plurality PP of prediction paths to obtain a plurality CH-PRED-2' of second channel predictions using the at least one machine learning system ML-SYS, each of the plurality CH-PRED-2' of second channel predictions associated with a respective one of the plurality PP of prediction paths, combine 262 at least two of the plurality of second channel predictions. In some examples, this enables to further refine second channel predictions. Further details regarding aspects of combining according to further examples are explained further below with reference to Fig. 16, 17.

In some examples, Fig. 2, the at least one machine learning system ML-SYS may, e.g., implement a respective instance of the first machine learning model MLM-1 and the second machine learning model MLM-2.

In some examples, more than one machine learning system may be provided, wherein, for example, at least two machine learning systems may comprise different instances of the first machine learning model MLM-1 (Fig. 2) and the second machine learning model MLM-2. In some examples, the at least two machine learning systems may be implemented by providing a single hardware and/or software basis for implementing the first and second machine learning models, e.g., using components 102, 104, 106 of the apparatus 100 according to some examples, and by providing different sets of parameters (e.g., weights, and the like) and/or hyper parameters for the respective machine learning models, the different sets of parameters and/or hyper parameters, e.g., associated with a respective one of the different machine learning systems.

In some examples, e.g., when providing a single hardware and/or software basis for implementing the first and second machine learning models, e.g., using components 102, 104, 106 of the apparatus 100 according to some examples, processing of aspects related to the different machine learning systems (e.g., performing at least one of training or inference) may, e.g., be performed in a time division duplexed manner.

In some examples, e.g., when providing several hardware and/or software bases for implementing the first and second machine learning models, e.g., using components 102, 104, 106 of the apparatus 100 according to some examples, processing of aspects related to the different machine learning systems (e.g., performing at least one of training or inference) may, e.g., be performed in a at least partly temporally overlapping fashion, e.g., in parallel, e.g., simultaneously.

In some examples, Fig. 12, the instructions 106, when executed by the at least one processor 102, cause the apparatus 100 to: provide 265 a plurality ML-SYS' of machine learning systems, train 267 at least two machine learning systems of the plurality ML-SYS' of machine learning systems differently from each other. In some examples, training 267 the at least two machine learning systems of the plurality of machine learning systems differently from each other may comprise at least one of: a) using different training data for the training, or b) using different parameters, e.g., hyper parameters, for the at least two machine learning systems.

In some examples, Fig. 11, the instructions 106, when executed by the at least one processor 102, cause the apparatus 100 to: provide 263 the at least two of the plurality CH-PRED-2' of second channel predictions to at least one further machine learning system. Further details and examples regarding providing second channel predictions to at least one further machine learning system are provided further below with reference to Fig. 17.

In some examples, Fig. 2, at least one of a) the first machine learning model MLM-1 or b) the second machine learning model MLM-2 is a neural network.

In some examples, at least one of a) the first machine learning model MLM-1 or b) the second machine learning model MLM-2 may comprise two or more layers.

In some examples, at least one of a) the first machine learning model or b) the second machine learning model may comprise two fully connected layers.

In some other examples, at least one of the a) the first machine learning model or b) the second machine learning model may comprise another type and/or topology, e.g., convolutional neural network, CNN, or other type.

Some examples, Fig. 1B, relate to an apparatus 100', comprising means 102' for: providing 200 (Fig. 3) a first machine learning model MLM-1 configured to receive first information associated with at least one signal and to provide a first channel prediction based on the first information, providing 202 a second machine learning model MLM-2 configured to receive second information and to provide a second channel prediction based on the second information, the second information comprising the first information and at least temporarily comprising the first channel prediction, determining 204 the second channel prediction using at least the second machine learning model.

In some examples, Fig. 1B, the means 102' for providing the first machine learning model, providing the second machine learning model, determining the second channel prediction may comprise at least one processor 102 (Fig. 1A), and at least one memory 104 storing instructions 106 that, when executed by the at least one processor 102, cause the apparatus 100' to perform at least one of the aforementioned aspects of providing 200 the first machine learning model, providing 202 the second machine learning model, determining 204 the second channel prediction.

In some examples, Fig. 1B, the means 102' for providing the first machine learning model, providing the second machine learning model, determining the second channel prediction may, e.g., comprise circuitry 104' configured to perform at least one of the aforementioned aspects 200, 202, 204.

In some examples, a combination of the configurations 100, 100' is also possible, e.g., providing the configuration 100 of Fig. 1A with some circuitry 104' (Fig. 1B), e.g., for hardware acceleration of at least one of the machine learning models MLM-1, MLM-2.

Some examples, Fig. 3, relate to a method, comprising: providing 200 a first machine learning model MLM-1 configured to receive first information associated with at least one signal and to provide a first channel prediction based on the first information, providing 202 a second machine learning model MLM-2 configured to receive second information and to provide a second channel prediction based on the second information, the second information comprising the first information and at least temporarily comprising the first channel prediction, determining 204 the second channel prediction using at least the second machine learning model MLM-2.

Some examples, Fig. 2, relate to a device 10 for a communication system, e.g., a wireless, e.g., cellular, communication system, the device 10 comprising at least one apparatus 100, 100' according to the example embodiments.

In some examples, the device 10 may, e.g., be a user equipment or other mobile device.

In the following, further example aspects and example embodiments are disclosed, which, in some examples, may be combined with each other and/or with at least one of the aforementioned example aspects or example embodiments.

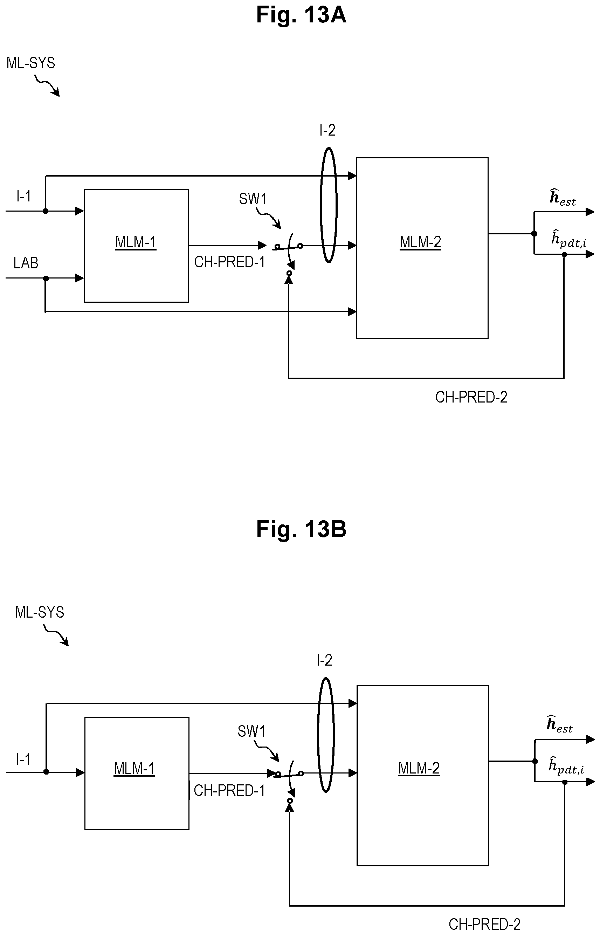

Fig. 13A schematically depicts aspects of a machine learning system ML-SYS according to some examples, e.g., related to a training phase. Fig. 13B schematically depicts aspects of the machine learning system ML-SYS according to some examples, e.g., related to an inference phase.

As already explained above with reference to Fig. 2, the machine learning system ML-SYS comprises the first machine learning model MLM-1, e.g., a first dense neural network, and the second machine learning model MLM-2, e.g., a second dense neural network.

In some examples, Fig. 13A, 13B, the first machine learning model MLM-1 can be configured, e.g., trained, to receive first information I-1 associated with the at least one signal SIG (Fig. 2) and to provide the first channel prediction CH-PRED-1 based on the first information I-1.

In some examples, the first information I-1 may be provided in the form of an observation vector, e.g., according to $\boldsymbol{y}_{est} = \boldsymbol{h}_{est} + \boldsymbol{z}$, wherein vector $\boldsymbol{h}_{est}$ characterizes the ground truth channel response as an estimable part (e.g., after removing known information associated with the signal SIG, such as, e.g., components of the reference signals, e.g., SRS), and wherein vector $\boldsymbol{z}$ characterizes a noise term, e.g. characterizing Additive White Gaussian Noise (AWGN).

Note that in some examples, e.g., throughout the following description, $\hat{\boldsymbol{h}}_{est}$ denotes an estimation of the ground truth estimable channel response $\boldsymbol{h}_{est}$, and $\hat{\boldsymbol{h}}_{pdt}$ denotes a prediction of the ground truth predictable channel response $\boldsymbol{h}_{pdt}$.

In some examples, the first channel prediction CH-PRED-1 as provided by the first machine learning model MLM-1 is a scalar value, e.g., according to

$$\hat{h}_{pdt,0} = \boldsymbol{w}_{hp}^T \boldsymbol{y}_{est}$$

, wherein $\boldsymbol{w}_{hp}^T$ characterizes a vector a multiplication of which with the observation vector $\boldsymbol{y}_{est}$ yields the first channel prediction CH-PRED-1, e.g., the scalar value $\hat{h}_{pdt,0}$, which in some examples can be considered as a rough first channel prediction. In other words, in some examples, the first machine learning model MLM-1 can be configured and/or trained to perform or approximate the multiplication of the observation vector $\boldsymbol{y}_{est}$ with the vector $\boldsymbol{w}_{hp}^T$.

In some examples, Fig. 13A, e.g., for a training of the first machine learning model MLM-1, labels LAB may be provided to the first machine learning model MLM-1, e.g., additionally to the first information I-1, e.g., in the form of a label vector

$$\boldsymbol{y}_{lab} = \begin{bmatrix} \boldsymbol{h}_{est}^T & h_{pdt} \end{bmatrix}^T$$

, wherein $\boldsymbol{h}_{est}$ characterizes the estimable part, as mentioned above, e.g., similar to element TRAIN-EST of Fig. 6, and wherein $h_{pdt}$ characterizes a predictable part, e.g., similar to element TRAIN-PRED of Fig. 6.

Thus, in some examples, the first training data DAT-TRAIN-1 (Fig. 6) for training of the first machine learning model MLM-1 (Fig. 13A) may, e.g., comprise the observation vector $\boldsymbol{y}_{est}$ and the label vector $\boldsymbol{y}_{lab}$.

In some examples, e.g., based on a given channel data set, which may, e.g., be obtained by collecting historic data associated with the signal SIG (Fig. 2), a training data structure may be provided for training of the first machine learning model MLM-1, the training data structure having the estimable part $\boldsymbol{h}_{est}$ (also see element TRAIN-EST of Fig. 6, for example), which is assumed to have been received in the past, e.g., at time instants $t_0$, $t_{-1}$, $t_{-2}$, etc., and the predictable part $h_{pdt}$ (also see element TRAIN-PRED of Fig. 6), which in some examples is assumed to happen in the future, e.g. at a time instant $t_1$. Note that, as, in some examples, all the data of the given channel data set has been already physically generated in the past, in some examples, the respective portions of data $\boldsymbol{h}_{est}$, $h_{pdt}$ may be, e.g., virtually, sorted out, e.g., to fulfill the timing criteria in the sense of the estimable part and the predictable part, also see the partitioning block 227 of Fig. 7.

In some examples, the first machine learning model MLM-1 can be trained using the observation vector $\boldsymbol{y}_{est}$ and the label vector $\boldsymbol{y}_{lab}$, e.g., as the first training data DAT-TRAIN-1, see also block 222 of Fig. 5, and the first loss function LF-1. In some examples, a conventional training procedure for training a neural network based on the first training data and the first loss function may be used for the training 222.

In some examples, the first loss function LF-1 may, e.g., be characterized by

$$\min_{\boldsymbol{w}_{hp}} \left\| \boldsymbol{w}_{hp}^T \boldsymbol{y}_{est} - h_{pdt} \right\|^2$$

, e.g., so that the training of the first machine learning model MLM-1 effects "de-

termining" the vector $w_{hp}$ (e.g., by learning parameters of the first machine learning model MLM-1) for minimizing the loss as defined by the first loss function LF-1, e.g., based on the observations $y_{est}$ and labels $y_{lab}$, e.g., according to a machine learning process. In some examples, e.g., when the training of the first machine learning model MLM-1, e.g., a searching procedure of the vector $w_{hp}$, reaches convergence, e.g., according to a predetermined degree (e.g., characterized by the first loss function LF-1 yielding values below a first threshold), the first machine learning model MLM-1 can be considered to be trained, and in some examples, the parameters of the so trained first machine learning model MLM-1 may be stored, e.g., for future inference, see, for example, Fig. 13B.

In some examples Fig. 13A, a rough channel prediction, e.g., in the sense of the first channel prediction CH-PRED-1, can be determined, e.g., computed, e.g., based on the first machine learning model MLM-1, e.g.,

$$\hat{h}_{pdt,0} = w_{hp}^T y_{est}$$

as .

In some examples, the first, e.g., rough, channel prediction $\hat{h}_{pdt,0}$ may be used, e.g., treated, as a virtual observation, e.g., for determining a further, e.g., new, observation vector for the second machine learning model MLM-2, e.g., characterized by

$$\tilde{y}_{est} = \begin{bmatrix} y_{est}^T & \hat{h}_{pdt,i-1} \end{bmatrix}^T$$

, where $\hat{h}_{pdt,i-1}$ denotes a virtual observation of an $i^{th}$ iteration ($i \geq 1$), and $\hat{h}_{pdt,0}$, e.g., as explained above, is an initial value, e.g., for the iteration $i = 1$.

In some examples, physically true observations as, e.g., characterized by the observation vector $y_{est}$, e.g., as opposed to the first channel prediction $\hat{h}_{pdt,0}$, are dominant in the further observation vector $\tilde{y}_{est}$, e.g., in terms of element numbers of the further observation vector $\tilde{y}_{est}$.

In some examples, the further observation vector $\tilde{y}_{est}$ may, e.g., together with the labels $y_{lab}$, be used to train the second machine learning model MLM-2, e.g., as the second training data DAT-TRAIN-2, see, for example, block 230 of Fig. 8. In some examples, Fig. 13A, 13B, the further observation vector $\tilde{y}_{est}$ may form the second information 1-2, as explained above.

In some examples, the second loss function LF-2 may, e.g., be characterized by

$$\min_{W_{hh,i}} \left\| W_{hh,i} \begin{bmatrix} y_{est} \\ \hat{h}_{pdt,i-1} \end{bmatrix} - \begin{bmatrix} h_{est} \\ h_{pdt} \end{bmatrix} \right\|^2$$

, wherein index $i$ denotes an i-th iteration, ($i \geq 1$). Thus, using the second loss function LF-2, in some examples, the second machine learning model MLM-2 may be trained to determine, e.g., implement, e.g., learn and compute, a matrix $W_{hh,i}$, e.g., for minimizing the loss as characterized by the second loss function LF-2, e.g., with the available observations and labels of corresponding iterations. In some examples, the parameters of the second machine learning model MLM-2 may be stored for future inference, e.g., when the training of the second machine learning model MLM-2 reaches its convergence.

In some examples, using the second machine learning model MLM-2, which e.g. implements the matrix $W_{hh,i}$, e.g., based on learned parameters of the second machine learning model MLM-2 for an $i^{th}$ iteration, a channel estimation $\hat{h}_{est}^T$ and a channel prediction $\hat{h}_{pdt,i}$ can be obtained, e.g. as characterized by

$$\begin{bmatrix} \hat{h}_{est}^T & \hat{h}_{pdt,i} \end{bmatrix}^T = W_{hh,i} \begin{bmatrix} y_{est}^T & \hat{h}_{pdt,i-1} \end{bmatrix}^T .$$

In other words, in some examples, the vector $\begin{bmatrix} y_{est}^T & \hat{h}_{pdt,i-1} \end{bmatrix}^T$ may form the second information I-2, and the second machine learning model MLM-2 is configure to determine the vector $\begin{bmatrix} \hat{h}_{est}^T & \hat{h}_{pdt,i} \end{bmatrix}^T$ based on the second information, wherein, for example, element $\hat{h}_{pdt,i}$ may represent the second channel prediction CH-PRED-2.

In some examples, the second channel prediction CH-PRED-2, e.g., element $\hat{h}_{pdt,i}$, may be fed back, e.g., as a refined virtual observation, see the switch SW1 of Fig. 13A, 13B. Thus, in some examples, the second information I-2 may at least temporarily comprise the first information I-1, e.g., in the form of the observation vector $y_{est}$, and the first channel prediction CH-PRED-1, e.g., in the form of the element $\hat{h}_{pdt,0}$, and the second information I-2 may at least temporarily comprise the first information I-1, e.g., in the form of the observation vector $y_{est}$, and the second channel prediction CH-PRED-2, e.g., in the form of the element $\hat{h}_{pdt,i}$, e.g., with i > 0, e.g., depending on a state of the switch SW1.

In some examples, a further, e.g., new, iteration of training the second machine learning model MLM-2 may be performed based on the feedback, e.g., to further improve a channel prediction, e.g., with the updated observations, e.g., the updated channel prediction $\hat{h}_{pdt,i}$ and the, for example original, observation $y_{est}$.

In some examples, e.g., in an inference or testing stage or phase, e.g., subsequent to the training of the machine learning models MLM-1, MLM-2, the trained machine learning models MLM-1, MLM-2 may adapt at least one of the vector $w_{hp}$ or the matrix $W_{hh,i}$, e.g., to any observation $y_{est}$ provided as input information.

In some examples, both a channel estimation $\hat{h}_{est}$ and a channel prediction $\hat{h}_{pdt,i}$ may be obtained using the machine learning models MLM-1, MLM-2, e.g., if $i$ iterations ($i \geq 1$) are used.

In some examples, the prediction at the output of the second machine learning model MLM-2 may be improved by implementing the matrix $W_{hh,i}$, e.g., because an element-wise cross-correlation as characterized by the matrix $W_{hh}$ may be exploited to finetune the prediction, e.g., with respect to the estimation $\hat{h}_{est}$.

In some examples, the second machine learning model MLM-2 may, e.g., comprise a topology as disclosed in the following reference: Yejian Chen; Jafar Mohammadi; Stefan Wesemann; Thorsten Wild; "Turbo-AI, Part I: Iterative Machine Learning Based Channel Estimation for 2D Massive Arrays," in Proc. 2021 IEEE 93rd Veh. Technol. Conf. (VTC'21 Spring), Helsinki, Finland, April 2021.

As mentioned above, in some examples, Fig. 13A, 13B, the first machine learning model MLM-1 may, e.g., be a first dense neural network, e.g., comprising two fully connected layers. In some examples, the first machine learning model MLM-1 is configured to receive as input the first information I-1 and, optionally, the labels LAB (e.g., for training). In some examples, the first information I-1 may be characterized by L many complex numbers, e.g., characterizing the observations $y_{est}$, and the labels LAB may be characterized by a, e.g., one, complex number. In some examples, the first machine learning model MLM-1 is configured to provide at its output the second channel prediction CH-PRED-2, e.g., in the form of L many complex numbers, e.g., characterizing the elements $\widehat{h}_{est}^{T}$ and $\hat{h}_{pdt,i}$.

In some examples, similarly, the second machine learning model MLM-2 may, e.g., be a second dense neural network, e.g., comprising two fully connected layers. In some examples, the second machine learning model MLM-2 may be configured to receive as input $L^2 + L$ many complex numbers, e.g., characterizing the observation vector associated with the second information I-2 and, optionally (e.g., for a training), the labels LAB.

In some examples, at least one of the first machine learning model MLM-1 or the second machine learning model MLM-2 may use an activation function of the SoftMax type.

As mentioned above, in some examples, historic data DAT-HIST of the at least one signal SIG associated with at least two different domains of the following domains: a) a time domain D-TIM, or b) a frequency domain D-FREQ, or c) a spatial domain D-SPAT may be collected, see Fig. 10, and training data DAT-TRAIN for training at least one of the first machine learning model MLM-1 or the second machine learning model MLM-2 may be determined based on the collected historic data.

In some examples, Fig. 2, 13A, 13B, channel prediction may be performed using the machine learning system ML-SYS, which does not rely on, e.g., only one, i.e., a single one of the aforementioned domains, e.g., the time domain. Rather, in some examples, channel prediction may be performed associated with at least two different domains.

In some examples, Fig. 14, a prediction path through various, presently for example three, domains, e.g., time, see axis a1 of Fig. 14, frequency, see axis a2, and space, see axis a3, may be defined, wherein different elements of the prediction path associated with the respective domains are denoted with circles "1", "2", ..., "13" connected via arrows which are not provided with references signs for the sake of intelligibility.

In some examples, using samples in the prediction path from frequency and spatial domains a2, a3 (e.g., additionally to the time domain a1) may improve a prediction, e.g., due to an increasing correlation.

In some examples, Fig. 14, e.g., for a given data set, e.g., obtained based on historic data of received reference signals, e.g., SRS, e.g., with an example SRS interval of 10 milliseconds, a, for example fixed, pattern may be determined, e.g., sorted out, e.g., for observations (e.g., for a noisy version of symbol 1 to symbol 12, see the circles "1" to "12") and labels (e.g., for a clean version of symbol 1 to symbol 13), e.g., with a reference current time instant t_ref.

In some examples, training data, e.g., a training data set, e.g., comprising an observation data set and a label data set, may be determined by, for example, repeatedly, picking out data in accordance with the prediction path "1", "2", ..., "13" as illustrated by the example of Fig. 14, e.g., with a fixed pattern as characterized by the prediction path, e.g., at different current time instants.

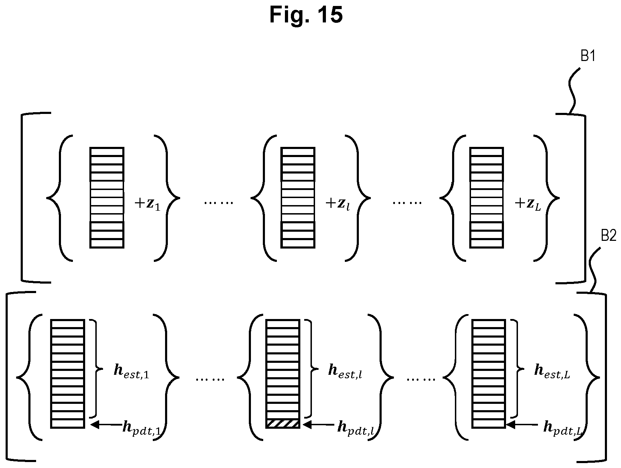

Fig. 15 schematically depicts such training data as can be obtained in some examples, wherein bracket B1 comprises the observation data set, and wherein bracket B2 comprises the label data set, wherein the elements $z_1$, ..., $z_L$ symbolise respective noise terms, e.g., of AWGN type.

In some examples, the machine learning models MLM-1, MLM-2 (Fig. 2) may be used to process data associated with at least two different prediction paths, see, for example blocks 260, 261 of Fig. 11.

In some examples, Fig. 16, two machine learning systems ML-SYS-1, ML-SYS-2 are provided to process data associated with two different prediction paths. In some examples, both machine learning systems ML-SYS-1, ML-SYS-2 comprise respective instances MLM-1', MLM-2', MLM-1'', MLM-2'' of the first machine learning models MLM-1, MLM-2, e.g., as depicted by Fig. 13A, 13B. Note that an optional feedback path from an output to an input of the respective second machine learning model instance MLM-2', MLM-2'' and the respective switch SW1 (Fig. 13A, 13B) is not depicted by Fig. 16 in detail, but rather symbolically by the dashed arrows fb1, fb2, for the sake of intelligibility.

In some examples, Fig. 16, a first prediction path may be implemented using the first machine learning system ML-SYS-1, and a second prediction path may be implemented using the second machine learning system ML-SYS-2.

In some examples, the first information I-1' provided as input to the instances MLM-1', MLM-2' of the first machine learning system ML-SYS-1 may, e.g., be associated with first frequency resources, e.g., one or more first subcarriers, whereas the first information I-1'' provided as input to the instances MLM-1'', MLM-2'' of the second machine learning system ML-SYS-2 may, e.g., be associated with second frequency resources, e.g., one or more second subcarriers, which are different from the first frequency resources. In some examples, the first subcarrier(s) and the second subcarrier(s) may be neighboring subcarriers.

In some examples, e.g., as neighboring subcarriers in the frequency domain may have a comparatively high correlation, a combination, e.g., an averaging, of both channel predictions, e.g., the respective second channel prediction $\hat{h}_{pdt,1}$, $\hat{h}_{pdt,2}$, may introduce a diversity gain, e.g., with at least one of a) independent noise realizations, or b) independent channel estimation errors, or c) independent channel prediction errors. In some examples, the combination (see, for example also block 262 of Fig. 11) may be effected by adding the respective second channel predictions $\hat{h}_{pdt,1}$, $\hat{h}_{pdt,2}$, see the symbolic adder ad1 of Fig. 16, optionally using weighting factors wf1, wf2, wherein, in some examples, wf1 = wf2 = 0.5.

In some examples, the first information I-1', 1-1'' provided as input to machine learning systems ML-SYS-1, ML-SYS-2 may, e.g., be associated with at least two different domains (e.g., temporal, spatial, frequency), e.g., at least similar to the example prediction path of Fig. 14.

In some examples, Fig. 16, more than two machine learning systems ML-SYS-1, ML-SYS-2 may be provided, wherein their respective outputs, e.g., respective second channel predictions, may be combined, e.g., in the sense of a, for example weighted, sum $\hat{h}_{pdt}$.

In some examples, a diversity order of 2 or higher, which in some examples may, e.g., be attained by combining the outputs of several machine learning systems ML-SYS-1, ML-SYS-2, may improve a prediction performance, e.g., for both low speed cases (e.g., associated with a comparatively low mobility, e.g., of the receiver RX) and high speed cases (e.g., associated with a comparatively high mobility).

In some examples, subcarrier combining may be performed, e.g., using a configuration as depicted by Fig. 16 or similar.

In some examples, as mentioned above, reference signals, e.g., sounding reference signals, SRS, may be used, e.g., to provide observations, e.g., as input data to the machine learning model(s) MLM-1, MLM-2. In some examples, other reference signals may be used alternatively or additionally, e.g., demodulation reference signals (DMRS), e.g., in cases with a channel reciprocity of uplink/downlink channels (e.g., with time division duplexing, TDD, scenarios). In some examples, using different types of reference signals, such as, e.g., SRS and DMRS, a prediction can be further enhanced or improved.

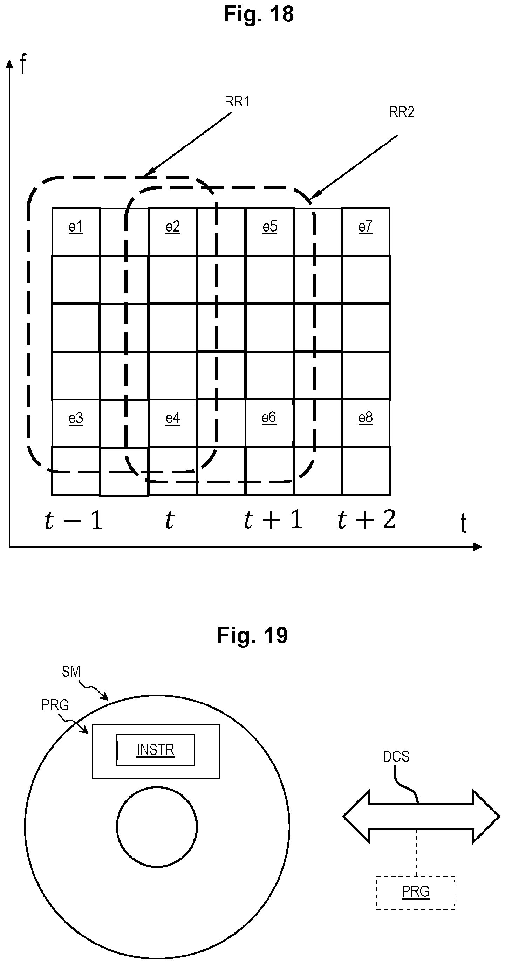

Fig. 17 schematically depicts aspects of combining respective outputs of a plurality of machine learning systems according to some examples. Depicted is a first plurality of, presently for example six, machine learning systems ML-SYS-n, ..., ML-SYS-n+5, only two of which are depicted for the sake of clarity. In some examples, the first plurality of machine learning systems ML-SYS-n, ..., ML-SYS-n+5 is configured to provide a respective channel prediction for a time instant t+1, e.g., based on input information, e.g., in the sense of the first information I-1 (Fig. 13A, 13B), e.g., observations, associated with preceding time instants t-1, t, also see the dashed rounded rectangle RR1 of the schematic time frequency resource pattern depicted by Fig. 18, e.g., denoting samples e1, e2, e3, e4, wherein the horizontal axis t characterizes time, and wherein the vertical axis f characterizes frequency.

Returning to Fig. 17, also depicted is a second plurality of, presently for example six, machine learning systems ML-SYS-m, ..., ML-SYS-m+5, only one of which (e.g., system ML-SS-m) is depicted for the sake of clarity. In some examples, the second plurality of machine learning systems ML-SYS-m, ..., ML-SYS-m+5 is configured to provide a respective channel prediction for a time instant t+2, e.g., based on input information, e.g., in the sense of the first information I-1 (Fig. 13A, 13B), e.g., observations, associated with time instants t, t+1, also see the dashed rounded rectangle RR2, e.g., denoting samples e2, e4, e5, e6, of Fig. 18, wherein second channel predictions as may be obtained by the second plurality of machine learning systems ML-SYS-m, ..., ML-SYS-m+5, e.g., for the time instant t+2, are symbolized with reference signs e7, e8 in Fig. 18.

Note that, in some examples, the machine learning models MLM-1, MLM-2 of at least some, for example all, machine learning systems as depicted by Fig. 17 may have a similar or identical topology and/or configuration.

In some examples, Fig. 17, the input I-1-n, ..., I-1-n+5 to the various, presently for example six, machine learning systems ML-SYS-n, ..., ML-SYS-n+5, may comprise a number of observations, e.g., characterizing the same, for example twelve, symbols, however, with a respective different sequence of symbols for the different machine learning systems ML-SYS-n, ..., ML-SYS-n+5.

In some examples, the respective output of the machine learning systems ML-SYS-n, ..., ML-SYS-n+5 is combined by a combiner COMB (see, for example, also block 262 of Fig. 11), which may, e.g., be configured to perform a vectorization such that an observation vector OV may be provided as input to the further machine learning systems ML-SYS-m, ..., ML-SYS-m+5, wherein a first number n1 of elements of the observation vector OV characterize an estimation of the time instant t, and wherein a second number n2 of elements of the observation vector OV characterize the second channel predictions CH-PRED-2-n, ..., CH-PRED-2-n+5 as output by the machine learning systems ML-SYS-n, ..., ML-SYS-n+5, wherein, in some examples, the second channel predictions CH-PRED-2-n, ..., CH-PRED-2-n+5 may e.g. be considered to represent virtual observations.

In some examples, the configuration of Fig. 17 can be considered as a concatenated prediction structure, wherein a plurality of second channel predictions CH-PRED-2-n, ..., CH-PRED-2-n+5 as, e.g., obtained by the first plurality of machine learning systems ML-SYS-n, ..., ML-SYS-n+5 is provided to at least one further machine learning system ML-SYS-m, ..., ML-SYS-m+5, also see block 263 of Fig. 11.

In some examples, Fig. 17, 18, each of the machine learning systems ML-SYS-n, ..., ML-SYS-n+5 may be configured to use, e.g., exploit, the samples e1, e2, e3, e4, e.g., in time instant $t - 1$ to $t$, see the dashed rounded rectangle RR1, e.g., to determine a second channel prediction, e.g., for the time instant $t + 1$, see the elements e5, e6. In some examples, the further machine learning systems ML-SYS-m, ..., ML-SYS-m+5 may be configured to use, e.g., exploit, the samples e2, e4, e5, e6 e.g., in time instant $t$ to $t + 1$, see the dashed rounded rectangle RR2, e.g., to determine a second channel prediction, e.g., for the time instant $t + 2$, see the elements e7, e8.

In some examples, Fig. 2, the principle according to example embodiments may be used for devices 10 for a wireless, e.g., cellular, communications system, e.g., based on and/or adhering to some accepted specification, e.g., standard, such as, e.g., 5G or 6G or beyond 6G ("B6G") or some other accepted specification or standard.

In some examples, the principle according to example embodiments enables to use reference signals, e.g., of the SRS and/or DMRS type, wherein, for example, comparatively precise second channel predictions may be obtained based on an SRS interval of, e.g., 10 ms.

In some examples, the principle according to example embodiments enables to perform at least one of precoding or beamforming, e.g., for a downlink direction, e.g., on a symbol-level, which, in some examples, may, for example significantly, impact, e.g., improve, both multiuser and single user MIMO, so that, in some examples, a downlink throughput may be comparatively close to an achievable downlink capacity.

Some examples, Fig. 19, relate to a computer program PRG comprising instructions INSTR which, when executed by an apparatus, e.g., apparatus 100 or 100' (Fig. 1A, 1B, 2), cause the apparatus to perform at least some aspects of the method according to the example embodiments.

In some examples, Fig. 19, the computer program PRG may be provided on a computer readable storage medium SM, e.g., a non-transitory computer readable medium.

Some examples, Fig. 19, relate to a data carrier signal DCS carrying and/or characterizing the computer program PRG according to the example embodiments.

In some examples, the principle according to example embodiments enables to address channel aging. In some examples, channel aging means a nonvanishing delay between a first time instant, when, for example, a reception of a reference signal, e.g., SRS, in an uplink direction, and a respective channel estimation happen, and a second time instant, when a downlink transmission happens, e.g., based on the channel estimation. In some examples, channel aging can lead to certain inconsistencies with respect to a radio channel, e.g., a channel response in the real world can deviate significantly from a conventionally estimated or predicted channel (as, e.g., obtained through at least one of uplink channel state information, UL CSI, or uplink sounding reference signals, UL SRS).

In some examples, channel aging can be attributed to a processing latency, e.g., in UL channel estimation and downlink, DL, precoding computation and to a signaling latency, e.g., limited by an SRS reporting interval. In some conventional approaches, channel aging can thus lead to performance degradation, e.g., since an outdated channel may introduce mismatched DL beamforming vector or precoding matrix and start to constrain a DL throughput. In some examples, channel aging may happen, when a user of a mobile device 10 (Fig. 2) moves, e.g., with increasing mobility. In some conventional approaches, a communication through the downlink may, e.g., not become better, until a next SRS arrives, e.g., to refresh DL beamforming or precoding weights. In some examples, the principle according to example embodiments enables to mitigate at least some of the potential disadvantages that may result from channel aging, e.g., by providing a, for example second, channel prediction.

**Claims**

1. An apparatus (100), comprising at least one processor (102), and at least one memory (104) storing instructions (106) that, when executed by the at least one processor (102), cause the apparatus (100) to: provide (200) a first machine learning model (MLM-1) configured to receive first information (I-1) associated with at least one signal (SIG) and to provide a first channel prediction (CH-PRED-1) based on the first information (I-1), provide (202) a second machine learning model (MLM-2) configured to receive second information (I-2) and to provide a second channel prediction (CH-PRED-2) based on the second information (I-2), the second information (I-2) comprising the first information (I-1) and at least temporarily comprising the first channel prediction (CH-PRED-1), determine (204) the second channel prediction (CH-PRED-2) using at least the second machine learning model (MLM-2).

2. The apparatus (100) according to claim 1, wherein the instructions (106), when executed by the at least one processor (102), cause the apparatus (100) to at least temporarily provide (210) the first information (I-1) and the second channel prediction (CH-PRED-2) as the second information (I-2) to the second machine learning model (MLM-2).

3. The apparatus (100) according to any of the preceding claims, wherein the instructions (106), when executed by the at least one processor (102), cause the apparatus (100) to: provide (220) first training data (DAT-TRAIN-1) for training of at least the first machine learning model (MLM-1), wherein the first training data (DAT-TRAIN-1) comprises an estimable part (TRAIN-EST), a predictable part (TRAIN-PRED), and associated labels (TRAIN-LAB), train (222) at least the first machine learning model (MLM-1) based on the first training data (DAT-TRAIN-1) and a first loss function (LF-1).

4. The apparatus (100) according to claim 3, wherein the instructions (106), when executed by the at least one processor (102), cause the apparatus (100) to: provide (225) historic data (DAT-HIST) of the at least one signal (SIG), to partition (227) the historic data (DAT-HIST) into the estimable part (TRAIN-EST) and the predictable part (TRAIN-PRED).

5. The apparatus (100) according to any of the claims 3 to 4, wherein the instructions (106), when executed by the at least one processor (102), cause the apparatus (100) to: provide (230) second training data (DAT-TRAIN-2) for training of the second machine learning model (MLM-2), wherein the second training data (DAT-TRAIN-2) comprises the first training data (DAT-TRAIN-1) and at least one of: a) the first channel prediction (CH-PRED-1), or b) the second channel prediction (CH-PRED-2), train (232) the second machine learning model (MLM-2) based on the second training data (DAT-TRAIN-2) and a second loss function (LF-2), which is different from the first loss function (LF-1).

6. The apparatus (100) according to any of the claims 3 to 5, wherein the instructions (106), when executed by the at least one processor (102), cause the apparatus (100) to: use (240) the first training data (DAT-TRAIN-1) and the first channel prediction (CH-PRED-1) as obtained by the first machine learning model (MLM-1) in a first training phase (PH-TRAIN-1) for training the second machine learning model (MLM-2), use (242) the first training data (DAT-TRAIN-1) and the second channel prediction (CH-PRED-2) as obtained by the second machine learning model (MLM-2) in a subsequent second training phase (PH-TRAIN-2) for training the second machine learning model (MLM-2).

7. The apparatus (100) according to any of the preceding claims, wherein the instructions (106), when executed by the at least one processor (102), cause the apparatus (100) to: collect (250) historic data of the at least one signal associated with at least two different domains of the following domains: a) a time domain (D-TIM), or b) a frequency domain (D-FREQ), or c) a spatial domain (D-SPAT), determine (252) training data (DAT-TRAIN) for training at least one of the first machine learning model (MLM-1) or the second machine learning model (MLM-2) based on the collected historic data.

8. The apparatus (100) according to any of the preceding claims, wherein the instructions (106), when executed by the at least one processor (102), cause the apparatus (100) to: provide (260) at least one machine learning system (ML-SYS) comprising an instance of the first machine learning model (MLM-1) and an instance of the second machine learning model (MLM-2), provide (261) a plurality (PP) of prediction paths to obtain a plurality (CH-PRED-2') of second channel predictions using the at least one machine learning system (ML-SYS), each of the plurality (CH-PRED-2') of second channel predictions associated with a respective one of the plurality (PP) of prediction paths, combine (262) at least two of the plurality (CH-PRED-2') of second channel predictions.

9. The apparatus (100) according to claim 8, wherein the instructions (106), when executed by the at least one processor (102), cause the apparatus (100) to: provide (265) a plurality (ML-SYS') of machine learning systems, train (267) at least two machine learning systems of the plurality of machine learning systems differently from each other.

10. The apparatus (100) according to any of the claims 8 to 9, wherein the instructions (106), when executed by the at least one processor (102), cause the apparatus (100) to: provide (263) the at least two of the plurality (CH-PRED-2') of second channel predictions to at least one further machine learning system (ML-SYS-m).

11. The apparatus (100) according to any of the preceding claims, wherein at least one of a) the first machine learning model (MLM-1) or b) the second machine learning model (MLM-2) is a dense neural network.

12. An apparatus (100'), comprising means (102') for: providing (200) a first machine learning model (MLM-1) configured to receive first information (I-1) associated with at least one signal and to provide a first channel prediction (CH-PRED-1) based on the first information (I-1), providing (202) a second machine learning model (MLM-2) configured to receive second information (I-2) and to provide a second channel prediction (CH-PRED-2) based on the second information (I-2), the second information (I-2) comprising the first information (I-1) and at least temporarily comprising the first channel prediction (CH-PRED-1), determining (204) the second channel prediction (CH-PRED-2) using at least the second machine learning model (MLM-2).

13. A method, comprising: providing (200) a first machine learning model (MLM-1) configured to receive first information (I-1) associated with at least one signal and to provide a first channel prediction (CH-PRED-1) based on the first information (I-1), providing (202) a second machine learning model (MLM-2) configured to receive second information (I-2) and to provide a second channel prediction (CH-PRED-2) based on the second information (I-2), the second information (I-2) comprising the first information (I-1) and at least temporarily comprising the first channel prediction (CH-PRED-1), determining (204) the second channel prediction (CH-PRED-2) using at least the second machine learning model (MLM-2).

14. A device (10) for a communication system, the device (10) comprising at least one apparatus (100; 100') according to any of the claims 1 to 12.

15. A computer program (PRG) comprising instructions (INSTR) which, when executed by an apparatus, cause the apparatus to perform at least some aspects of the method according to claim 13.

# Fig. 1A

# Fig. 1B

# Fig. 2

## Fig. 3

200 — PROVIDE FIRST MACHINE LEARNING MODEL CONFIGURED TO RECEIVE FIRST INFORMATION AND TO PROVIDE FIRST CHANNEL PREDICTION BASED ON FIRST INFORMATION

MLM-1

202 — PROVIDE SECOND MACHINE LEARNING MODEL CONFIGURED TO RECEIVE SECOND INFORMATION AND TO PROVIDE SECOND CHANNEL PREDICTION BASED ON SECOND INFORMATION

MLM-2

204 — DETERMINE SECOND CHANNEL PREDICTION USING AT LEAST SECOND MACHINE LEARNING MODEL

CH-PRED-2

## Fig. 4

210 — AT LEAST TEMPORARILY PROVIDE FIRST INFORMATION AND SECOND CHANNEL PREDICTION AS SECOND INFORMATION TO SECOND MACHINE LEARNING MODEL

I-1, CH-PRED-2, I-2

212 — DETERMINE SECOND CHANNEL PREDICTION USING AT LEAST SECOND MACHINE LEARNING MODEL

CH-PRED-2

# Fig. 5

220

PROVIDE FIRST TRAINING DATA

DAT-TRAIN-1

222

TRAIN AT LEAST FIRST MACHINE LEARNING MODEL BASED ON FIRST TRAINING DATA AND FIRST LOSS FUNCTION

MLM-1, DAT-TRAIN-1, LF-1

# Fig. 6

DAT-TRAIN-1

DAT-HIST

TRAIN-EST        TRAIN-PRED

TRAIN-LAB

# Fig. 7

225

PROVIDE HISTORIC DATA

DAT-HIST

227

PARTITION HISTORIC DATA INTO ESTIMABLE PART AND PREDICTABLE PART

TRAIN-EST, TRAIN-PRED

## Fig. 8

230 → PROVIDE SECOND TRAINING DATA

↓ DAT-TRAIN-2

232 → TRAIN SECOND MACHINE LEARNING MODEL BASED ON SECOND TRAINING DATA AND SECOND LOSS FUNCTION

↓ MLM-2, DAT-TRAIN-2, LF-2

## Fig. 9

240 → USE FIRST TRAINING DATA AND FIRST CHANNEL PREDICTION IN FIRST TRAINING PHASE FOR TRAINING SECOND MACHINE LEARNING MODEL

↓ PH-TRAIN-1, MLM-2

242 → USE FIRST TRAINING DATA AND SECOND CHANNEL PREDICTION IN SUBSEQUENT SECOND TRAINING PHASE FOR TRAINING SECOND MACHINE LEARNING MODEL

↓ PH-TRAIN-2, MLM-2

## Fig. 10

250 → COLLECT HISTORIC DATA ASSOCIATED WITH AT LEAST TWO DIFFERENT DOMAINS

↓ DAT-HIST, D-TIM, D-FREQ, D-SPAT

252 → DETERMINE TRAINING DATA BASED ON COLLECTED HISTORIC DATA

↓ DAT-TRAIN

# Fig. 11

260 — PROVIDE AT LEAST ONE MACHINE LEARNING SYSTEM

ML-SYS

261 — PROVIDE PLURALITY OF PREDICITION PATHS TO OBTAIN PLURALITY OF SECOND CHANNEL PREDICTIONS USING AT LEAST ONE MACHINE LEARNING SYSTEM

PP, CH-PRED-2'

262 — COMBINE AT LEAST TWO OF PLURALITY OF SECOND CHANNEL PREDICTIONS

263 — PROVIDE AT LEAST TWO OF PLURALITY OF SECOND CHANNEL PREDICTIONS

# Fig. 12

265 — PROVIDE PLURALITY OF MACHINE LEARNING SYSTEMS

ML-SYS'

267 — TRAIN AT LEAST TWO MACHINE LEARNING SYSTEMS OF PLURALITY OF MACHINE LEARNING SYSTEMS DIFFERENTLY FROM EACH OTHER

# Fig. 13A

ML-SYS

I-2

I-1

SW1

MLM-1

$\widehat{h}_{est}$

LAB

CH-PRED-1

MLM-2

$\widehat{h}_{pdt,i}$

CH-PRED-2

# Fig. 13B

ML-SYS

I-2

I-1

SW1

MLM-1

$\widehat{h}_{est}$

CH-PRED-1

MLM-2

$\widehat{h}_{pdt,i}$

CH-PRED-2

# Fig. 14

# Fig. 15

# Fig. 16

**Fig. 17**

# Fig. 18

# Fig. 19

**EUROPEAN SEARCH REPORT**

Application Number

EP 23 21 4930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/193570 A1 (MEDIATEK INC [CN]) 12 October 2023 (2023-10-12)<br>* page 8, line 1 - line 9 *<br>* figures 3, 5 *<br>----- | 1-15 | INV.<br>H04L25/02<br>G06N3/045<br>G06N3/08 |
| X | EP 4 270 884 A1 (NOKIA TECHNOLOGIES OY [FI]) 1 November 2023 (2023-11-01)<br>* paragraphs [0032], [0064] *<br>* figure 2 *<br>----- | 1-15 | |
| X | US 2021/376895 A1 (XUE YISHENG [US] ET AL) 2 December 2021 (2021-12-02)<br>* paragraph [0050] *<br>* claim 1 *<br>* figures 4, 9 *<br>----- | 1,12-15 | |
| A | WO 2022/205016 A1 (GUANGDONG OPPO MOBILE TELECOMMUNICATIONS CORP LTD [CN]) 6 October 2022 (2022-10-06)<br>* the whole document *<br>& US 2024/022455 A1 (TIAN WENQIANG [CN] ET AL) 18 January 2024 (2024-01-18)<br>* figures 2A, 2B, 2C, 2D, 2E, 5G *<br>* paragraphs [0045] - [0076], [0118] - [0123] *<br>----- | 1-15 | TECHNICAL FIELDS SEARCHED (IPC)<br><br>H04L<br>G06N |

The present search report has been drawn up for all claims

| Place of search | Date of completion of the search | Examiner |
|---|---|---|
| Munich | 29 May 2024 | Franz, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 4930

This annex lists the patent family members relating to the patent documents cited in  the above-mentioned European search report.
The members are as contained in the European Patent Office EDP file on
The European Patent Office is in no way liable for these particulars which are merely given for the purpose of information.

29-05-2024

| Patent document cited in search report | | Publication date | Patent family member(s) | | Publication date |
|---|---|---|---|---|---|
| WO 2023193570 | A1 | 12-10-2023 | TW | 202341685 A | 16-10-2023 |
| | | | WO | 2023193570 A1 | 12-10-2023 |
| EP 4270884 | A1 | 01-11-2023 | NONE | | |
| US 2021376895 | A1 | 02-12-2021 | CN | 116210181 A | 02-06-2023 |
| | | | EP | 4158810 A1 | 05-04-2023 |
| | | | US | 2021376895 A1 | 02-12-2021 |
| | | | WO | 2021242393 A1 | 02-12-2021 |
| WO 2022205016 | A1 | 06-10-2022 | CN | 117083839 A | 17-11-2023 |
| | | | EP | 4319070 A1 | 07-02-2024 |
| | | | US | 2024022455 A1 | 18-01-2024 |
| | | | WO | 2022205016 A1 | 06-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YEJIAN CHEN** ; **JAFAR MOHAMMADI** ; **STEFAN WESEMANN** ; **THORSTEN WILD**. Turbo-AI, Part I: Iterative Machine Learning Based Channel Estimation for 2D Massive Arrays. *Proc. 2021 IEEE 93rd Veh. Technol. Conf. (VTC'21 Spring), Helsinki, Finland*, April 2021